# EUROPEAN PATENT APPLICATION

(11) **EP 4 410 394 A1**
(43) Date of publication of application: **07.08.2024**
(21) Application number: 23206345.3
(22) Date of filing: 27.10.2023
(51) Int. Cl.: A63H 33/22, A63H 33/40, G03B 25/00

(54) **TOY APPARATUS FOR PROVIDING AN OPTICAL ILLUSION**

(30) Priority: 27.10.2022 GB 202215920
(71) Applicant: Hancock, Philippa, Claire, Barbara, Beaconsfield Buckinghamshire HP9 2AS (GB)
(72) Inventor: Hancock, Philippa, Claire, Barbara, Beaconsfield Buckinghamshire HP9 2AS (GB)
(74) Representative: Fry, David John

(57) **Abstract**

Toy apparatus (1) for providing an optical illusion, which toy apparatus (1) comprises:
(i) a rotor (4) which rotates about an axis;
(ii) at least one blade formation (8) for being engaged by a substance such as to cause the rotor (4) to rotate; and
(iii) at least one image (10) which rotates consequent upon rotation of the rotor (4),
and wherein:
(iv) the rotation of the at least one image causes the production of the optical illusion due to the viewer's persistence of vision.

## Description

This invention relates to toy apparatus and, more especially, this invention relates to toy apparatus for providing an optical illusion.

There are many known different types of apparatus for providing an optical illusion via the phenomenon known as the persistence of vision. Examples of such apparatus are zoetropes, praxinoscopes, phenakistoscopes, thaumatropes, kineographs and flip books. Original types of such apparatus have been known for over 100 years. Modern versions of the apparatus are disclosed in my UK Patent Nos. 2511117 and 2583267.

It is an aim of the present invention to provide new toy apparatus for providing an optical illusion due to the viewer's persistence of vision.

Accordingly, in one non-limiting embodiment of the present invention there is provided toy apparatus for providing an optical illusion, which toy apparatus comprises:
(i) a rotor which rotates about an axis;
(ii) at least one blade formation for being engaged by a substance such as to cause the rotor to rotate; and
(iii) at least one image which rotates consequent upon rotation of the rotor, and wherein:
   (iv) the rotation of the at least one image causes the production of the optical illusion due to the viewer's persistence of vision.

The viewer will typically be a child. The viewer may however be an older person if desired. The viewer may also be an animal. The driving of the rotor by the substance engaging the blade formation may provide viewer interest and enjoyment, for example where the viewer is actively involved in providing the substance.

The toy apparatus may be one in which the substance is a gas, and in which the blade formation is for being engaged by the gas such as to cause the rotor to rotate. The gas may be air. Alternatively, the gas may be the breath of the viewer. Alternatively, other gases may be employed.

The rotor and the blade formation may form a windmill construction. Constructions other than a windmill construction may be formed.

The toy apparatus may alternatively be one in which the substance is a liquid, and in which the blade formation is for being engaged by the liquid. The liquid may be water. Other liquids may however be employed.

The rotor and the blade formation may be a watermill. Constructions other than a watermill may be employed.

The toy apparatus may alternatively be one in which the substance is a solid or semi-solid, and in which the blade formation is for being engaged by the solid or semi-solid. The solid or semi-solid may be, for example, glass marbles, dough or gel. Other types of solids and semi-solids may be employed.

The toy apparatus may be one in which the blade formation comprises a substance-engagement portion for being engaged by the substance such as to cause the rotor to rotate.

The substance-engagement portion may be a flap, bucket, scoop, sail, angled vane or propeller. Other substance-engagement portions may be employed.

The blade formation may be or may include a flat panel. Where the blade formation is a flat panel, it may be the weight of the material from which the blade formation is constructed and/or a lack of friction and/or other factors that facilitate the flat panel responding to the force of the substance and cause the rotor to rotate.

The toy apparatus may be one in which the blade formation extends from the rotor.

The toy apparatus may be one in which there is a plurality of the blade formations.

The image may be part of the blade formation. Alternatively, the image may be separate from the blade formation.

The image may face in any direction of the axis about which the rotor rotates. Thus, for example, the image may face transversely of the axis about which the rotor rotates.

The toy apparatus may be one in which the rotor and the image rotate in the same or alternative directions to each other.

The toy apparatus may be one in which there is a plurality of the images.

The toy apparatus may be one in which a plurality of separate images, and in which the plurality of separate images rotate in the same or different directions to each other.

The toy apparatus may be one in which the rotor is linked by mechanical means to a separate device that displays the image.

The toy apparatus may include gear means. The gear means may be for affecting the speed and/or angle and/or position at which the image rotates, with respect to the rotor. The gear means may be a gear wheel or similar means. The gear means may be a gear train. The gear means may comprise gear wheels and/or cog wheels and/or pinions and/or belts.

The toy apparatus may include at least one differential wheel.

The toy apparatus may include support means for enabling the toy apparatus to be held in a person's hand and/or to be placed in the ground and/or or to be secured to a structure. When the toy apparatus is held in a person's hand or placed in the ground, then the support means may be a rod.

The toy apparatus may include securing means for securing the toy apparatus to a structure. When the toy apparatus is secured to a structure, the structure may be, for example, a wall, a pram, a cot or a bath.

The toy apparatus may be constructed for being suspended, in which case the suspended toy apparatus may form a mobile, and the structure may be, for example, a ceiling or an outdoor gazebo.

The toy apparatus may be a stand-alone toy apparatus. Alternatively, the toy apparatus may form part of another toy and/or another item.

The toy apparatus may include one or multiple rotors, for example to propel the device that displays the image.

The toy apparatus may include audio means. The audio means may be audio means operated via mechanical means.

The toy apparatus may be one which includes viewing apertures, and in which the viewing apertures facilitate the optical illusion. For example, the toy apparatus may be a phenakistoscope or other optical illusion provider which has the viewing apertures and in which the viewing apertures cause a flicker effect to facilitate the optical illusion.

Alternatively, the toy apparatus may be free of viewing apertures. In this case, the toy apparatus may be, for example, a mutoscope or an open-panelled styled construction in order to provide the optical illusion.

The toy apparatus may include secondary blade formations in order to produce a flicker effect over the at least one image to facilitate the optical illusion. The secondary blade formations do not necessarily engage with the substance but are there to produce a flicker-effect over the at least one moving image in order to facilitate the optical illusion.

The toy apparatus may be one in which the toy apparatus includes a joint formation for dynamically positioning the blade formation in its optimum position in relation to the substance. The joint formation may be, for example, a swivel joint. Other types of joint formation may be employed.

Embodiments of the invention will now be described solely by way of example and with reference to the accompanying drawings in which:
Figure 1 is a view from the rear and one side of first toy apparatus;
Figure 2 is a side view of the toy apparatus shown in Figure 1;
Figure 3 is a view of a child interacting with the type of toy apparatus shown in Figure 1 and 2;
Figure 4 is a view from above and the front of second toy apparatus;
Figure 5 is a front view of third toy apparatus;
Figure 6 is a view from the front and one side of the toy apparatus shown in Figure 5;
Figure 7 shows an example of an image panel for use in the toy apparatus shown in Figure 5;
Figure 8 is a front view of fourth toy apparatus;
Figure 9 is a view from the front and one side of the fourth toy apparatus shown in Figure 8;
Figure 10 shows an example of an image on a panel of the toy apparatus shown in Figure 8;
Figure 11 is a view from the front and one side of fifth toy apparatus;
Figure 12 is a view from the front and one side of a front panel in the toy apparatus shown in Figure 11;
Figure 13 is an example of an image on a panel of the toy apparatus shown in Figure 11;
Figure 14 shows sixth toy apparatus, and is an alternative embodiment to the toy apparatus shown in Figure 11;
Figure 15 shows an example of image panels of the toy apparatus shown in Figure 14;
Figure 16 shows seventh toy apparatus;
Figure 17 shows eighth toy apparatus;
Figure 18 shows nineth toy apparatus;
Figure 19 is an exploded view of the toy apparatus shown in Figure 18;
Figure 20 shows tenth toy apparatus;
Figure 21 is an exploded view of the toy apparatus shown in Figure 20;
Figure 22 shows eleventh toy apparatus and is an alternative embodiment to the toy apparatus shown in Figure 20;
Figure 23 is an exploded view of the toy apparatus shown in Figure 22;
Figure 24 shows twelfth toy apparatus;
Figure 25 shows thirteenth toy apparatus; and
Figure 26 shows fourteenth toy apparatus.

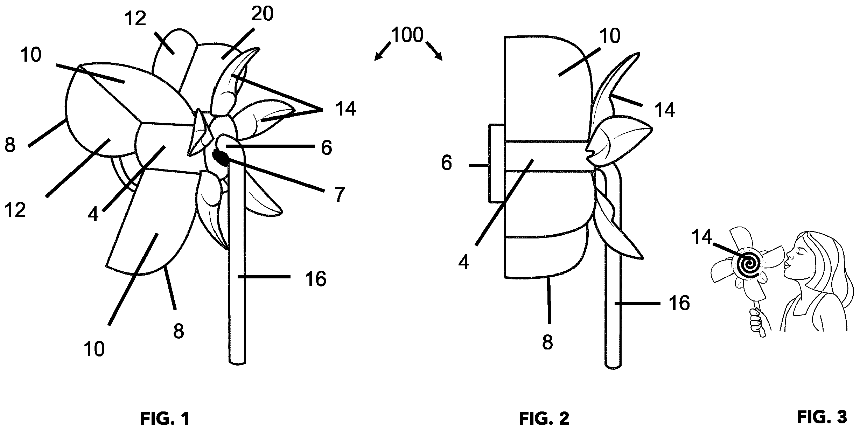

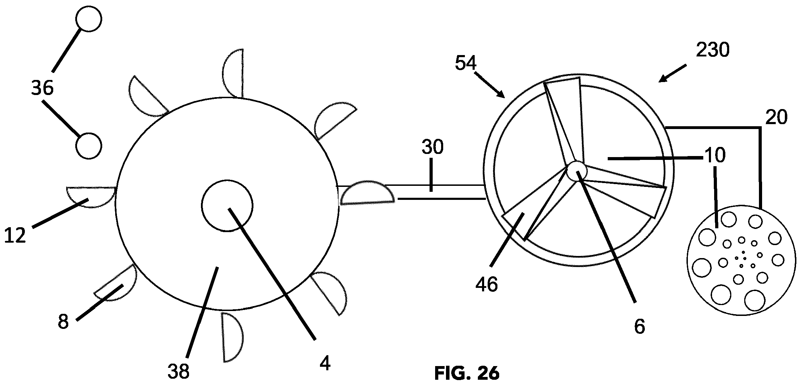

Figures 1 - 25 do not show the substance that is employed. Figure 26 shows the substance that is employed.

Referring to Figures 1-2, there is shown toy apparatus 100 for providing an optical illusion. The toy apparatus 100 comprises a rotor 4 which rotates about an axis 6. The toy apparatus 100 also comprises a plurality of blade formations 8 for being engaged by a substance such as to cause the rotor 4 to rotate. The toy apparatus 100 further comprises a plurality of images 10 (not shown) which rotate consequent upon rotation of the rotor 4. The rotation of the images 10 causes the production of the optical illusion due to the viewer's persistence of vision.

The toy apparatus 100 shown in Figures 1 - 2 operates such that the substance is air. The blade formations 8 are for being engaged by moving air such as to cause the rotor 4 to rotate. The rotor 4 and the blade formations 8 form a windmill construction.

In an alternative embodiment of the invention (not shown), the toy apparatus 100 may operate with a substance in the form of water, in which case the blade formations 8 would be for being engaged by the water. The rotor 4 and the blade formations 8 may then form a watermill.

In Figures 1 and 2, the blade formations 8 are such that they each comprise a substance-engagement portion 12 for being engaged by the substance such as to harness the substance. The substance-engagement portion 12 is in the form of a flap. Other constructions for the substance-engagement portion 12 may be employed so that, for example, the substance-engagement portion 12 may be a bucket, a sail, an angled vane or a propeller.

The images 10 (not shown) is on part of the blade formations 8. The image 10 face transversely of the axis 6 about which the rotor 4 rotates. As indicated in Figures 1 and 2, there is a plurality of the images 10. There is one of the images 10 on each one of the blade formations 8. In another embodiment (not shown) the image may be on each side of the blade formation 8.

The toy apparatus 100 includes at least one decorative formation 14. The decorative formation 14 is at a rear part of the toy apparatus 100 when the toy apparatus 100 is viewed from the front. There is a plurality of the decorative formations 14. The decorative formations 14 are a plurality of petal-like segments. In Figure 3 there is shown an additional decoration on the front of the apparatus in the form of a lined spiral.

The blade formations 8 are mounted on the rotor 4. The blade formations 8 extend radially from the rotor 4.

The toy apparatus 100 includes support means 16 for enabling the toy apparatus 100 to be held in a person's hand. The support means 16 is in the form of a rod. The support means 16 in the form of the rod may alternatively be placed in the ground. The support means 16 may alternatively be secured by securing means (not shown) to a structure, for example a wall, ceiling, a pram, a cot or another toy. Other forms of support means may be employed.

The toy apparatus 100 includes a joint formation in the form of a joint 7. The joint 7 is a swivel joint 7 that allows the toy apparatus 100 to swivel and/or move in order to capture the maximum substance. Other forms of joint formation may be employed.

The toy apparatus 100 is a stand-alone toy. Alternatively, the toy apparatus 100 may be constructed such that the toy apparatus 100 forms part of another toy AND/OR ITEM.

The rotor 4 and the images 10 rotate in the same direction in the toy apparatus 100. In alternative embodiments of the invention (not shown), the rotor 4 and the images 10 may rotate in different directions to each other.

Figure 3 shows an example of a child viewer interacting with a windmill-style toy apparatus as shown in Figures 1 - 2.

Similar parts for subsequent Figures, as in the toy apparatus 100 shown in Figures 1-3, have been given the same reference numerals for ease of comparison and understanding.

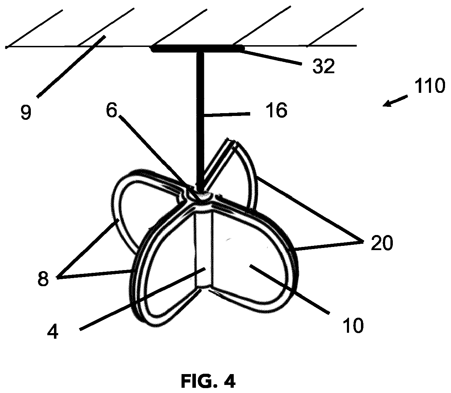

Referring now to Figure 4, there is shown toy apparatus 110 for providing an optical illusion. The toy apparatus 110 comprises a rotor 4 which rotates about an axis 6. The toy apparatus 110 comprises a plurality of blade formations 8 which are flat panels for being engaged by a substance, such as wind, to cause the rotor 4 to rotate. In an alternative embodiment, the toy apparatus 110 may be one in which there is a single blade formation 8. The single blade formation 8 may be in the form of a simple flat panel, for example like a weathervane (not shown). The toy apparatus 110 comprises a plurality of images 10. There is one image 10 on each blade formation 8 which rotates consequent upon rotation of the rotor 4. The rotation of the images 10 on panels 20 causes the production of the optical illusion due to the viewer's persistence of vision.

In the toy apparatus 110, where the blade formation 8 is a flat panel, it may be the weight of the material from which the blade formation is constructed and/or lack of friction and/or other factors that facilitate the movement of the blade formations 8. The movement of the blade formations 8 are responding to the force of the substance that facilitate the rotor 4 to rotate such that the viewer perceives the optical illusion from the moving images 10.

The toy apparatus 110 includes support means 16 and securing means 32 for enabling the toy apparatus 110 to be hung from a ceiling or other structure. The support means 16 is in the form of a rod. The support means 16 and the securing means 32 may be of other constructions and for other positionings.

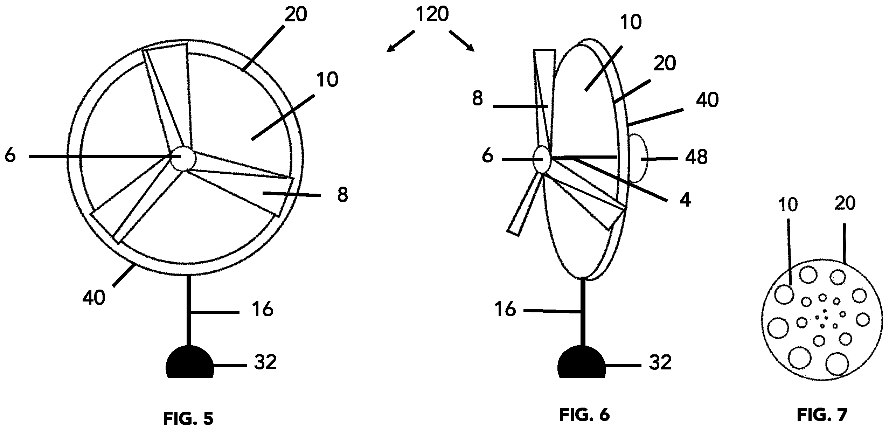

Referring now to Figures 5 - 7, there is shown toy apparatus 120. Figures 5, 6 and 7 illustrate how a single image 10 is on a panel 20, and how the panel 20 is positioned behind a plurality of blade formations 8. Figure 7 shows an example of a single image 10, with the image 10 being in the form of a detailed spiral. The distance between the blade formations 8 and the image 10 may be larger or smaller than that shown in Figure 6. The panel 20 may alternatively be a disc. The panel 20 sits on toy structure 40. During operation of the toy apparatus 120, the blade formations 8 at the front of the toy apparatus 120 create a flicker effect as the rotor 4 rotates the image 10. In an alternative construction, the image 10 may rotate in the opposite direction to the blade formations 8 via gear means (not shown). Figures 5 and 6 are shown comprising securing means 32 in the form of a suction cap 32.

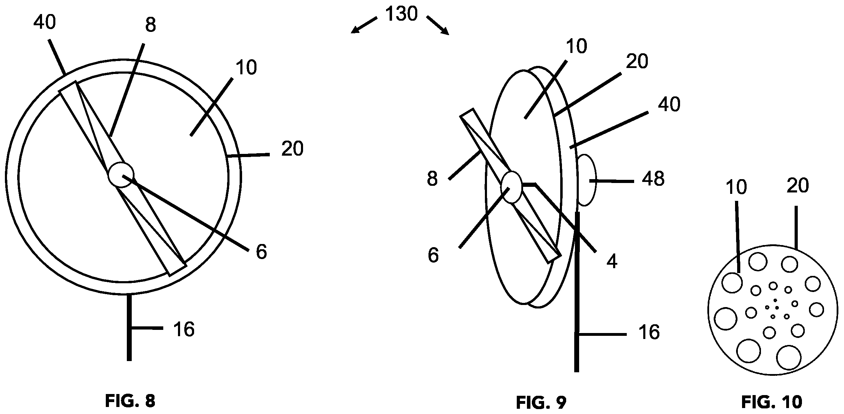

Figures 8 and 9 show toy apparatus 130. The toy apparatus 130 is similar to the toy apparatus 120 but the toy apparatus 130 has a single blade formation 8 and no securing means 32.

Figure 10 shows an example of a single image 10 on panel 20. The panel 20 is able to sit behind the blade formation 8 shown in the toy apparatus 130 of Figures 8 and 9.

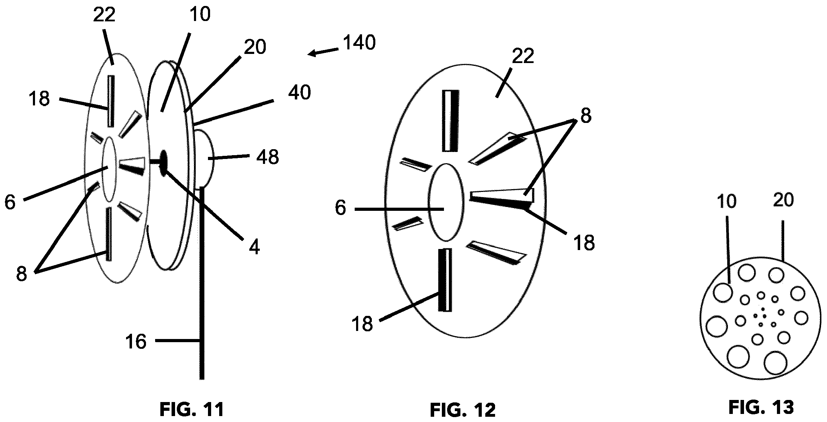

Figure 11 shows toy apparatus 140 of the present invention. The toy apparatus 140 is shown from one side and the front. The toy apparatus 140 is a developed form of a phenakistoscope. The front panel 22 has viewing apertures 18. The blade formations 8 on the panel 22 sit perpendicular to the surface of the panel 22. The front panel 22 and the image 10 (not shown in Figure 11) on the panel 20 are connected via the rotor 4. The substance (not shown) engages the blade formations 8 and causes the panel 22 to move, which engages the rotor 4. When the rotor 4 is engaged, it facilitates the movement of the image 10 on the panel 20 and when viewed via the viewing apertures 18 so provides an optical illusion for the viewer.

The image 10 is displayed on the panel 20 which sits on a toy structure 40. Behind this is a structure 48. The panel 22 with its blade formations 8 and the image 10 on the panel 20 may move in the same or different directions to each other.

In an alternative embodiment of the invention, the structure 48 may be part of the toy structure 40 and/or attachment means to attach the rotor 4.

Figure 12 shows an enlarged panel 22 in isolation and for ease of viewing and understanding. The viewing apertures 18 are more visible, as are the perpendicular blade formations 8 for harnessing the substance.

Figure 13 shows an example of the image 10 on the panel 20.

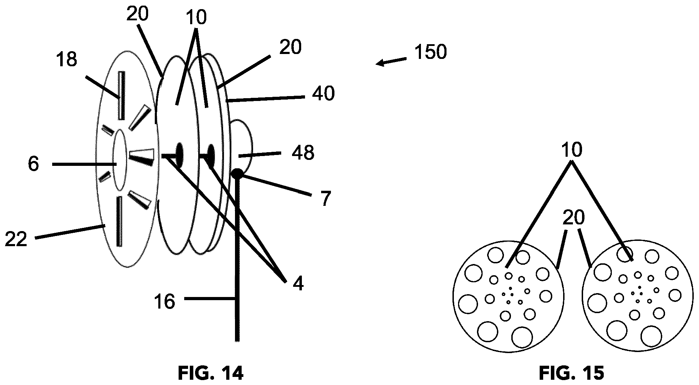

Figure 14 shows toy apparatus 150. The toy apparatus 150 is like the toy apparatus shown in Figure 11, but the toy apparatus 150 has two image panels 20 instead of one image panel 20. The first image panel 20 may be made of a transparent material or it may have viewing apertures (not shown) in order to produce a more complex optical illusion when moving. The two panels 20 may move in the same direction or in different directions to each other. In other embodiments, there may be multiple panels 20 displaying images 10 providing more complex animations.

The toy apparatus 150 includes a swivel joint 7 that allows the toy apparatus 150 to swivel in order to capture the maximum substance.

Figure 15 shows an example of the image 10 on two panels 20.

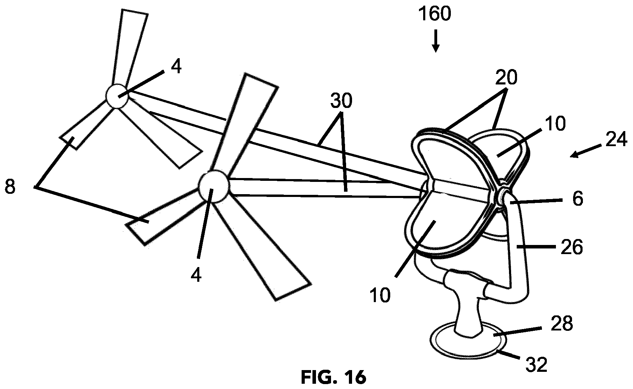

Figure 16 shows toy apparatus 160 of the present invention. The blade formations 8 are shown in multiple form and each is connected via mechanical means 30 to a device 24 which has a mount 26, a base 28 and securing means 32. The toy apparatus 160 has panels 20 for presenting images 10 (not shown). The mechanical means 30 links the rotor 4 with its blade formations 8 and drives the axis 6 which drives the panels 20 which hold the images 10 on the device 24. The mechanical means 30 may include gearing means, for example a gear train for affecting the speed and/or angle of rotation of the image 10 or alternatively a differential wheel (not shown). In the toy apparatus 160, the device 24 is another example of being separate from the blade formations 8 which engage with the substance remotely. The blade formations 8 utilise the substance to drive the device 24 via the mechanical means 30 to provide the optical illusion due to the viewer's persistence of vision.

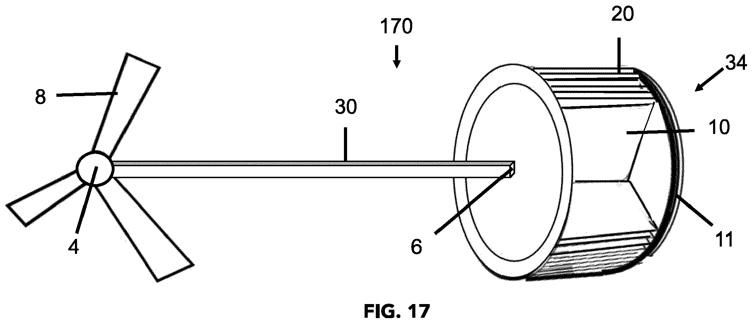

Figure 17 shows toy apparatus 170. The toy apparatus 170 is like the toy apparatus 160, except that the device 24 has been replaced by a device 34 and there is only one blade formation 8 shown. There is a mechanical means 30 which connects the rotor 4 to the device 34. The device 34 has panels 20 which flip over to show the images 10 consequent upon the panels 20 being rotated about an axis 6. The device 34 is contained in a housing 11. In an alternative embodiment of the invention, this may not be necessary, or a different structure may be used.

The toy apparatus shown in Figures 1-17 are constructed for operation with a substance in the form of a gas. The gas may be, for example, moving air / wind or breath. Each toy apparatus with adaptions may alternatively operate with a different substance. The substance may be, for example, water.

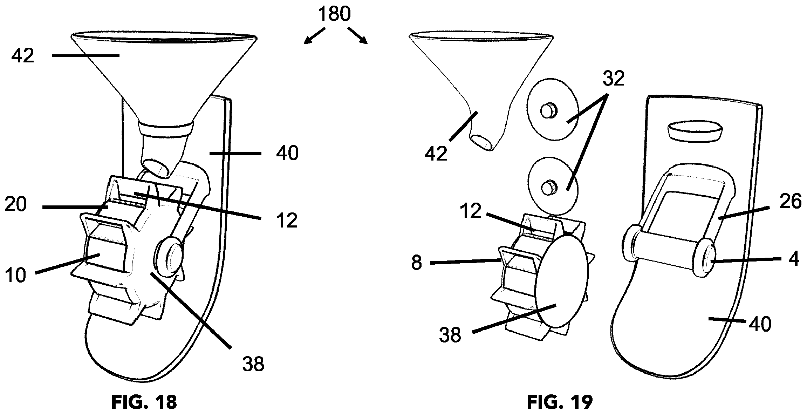

Figure 18 shows toy apparatus 180 of the present invention. The toy apparatus 180 is in the form of a watermill for a bath toy. The blade formations 8 form part of a wheel 38. The images 10 and the panels 20 form part of the wheel 38. When the substance, in this case water, engages with the substance-engagement portions 12 in the form of buckets on the blade formations 8, the rotor 4 rotates about the axis 6. When the moving images 10 on the panels 20 are viewed, they provide the optical illusion. The wheel 38 attaches to a mount 26. The mount 26 is attached to a toy structure 40. The toy apparatus 180 also comprises a funnel 42 for directing the substance to the substance-engagement portions 12 and the blade formations 8.

Figure 19 is an exploded view of the toy apparatus 180 shown in Figure 18. Figure 19 shows securing means 32.

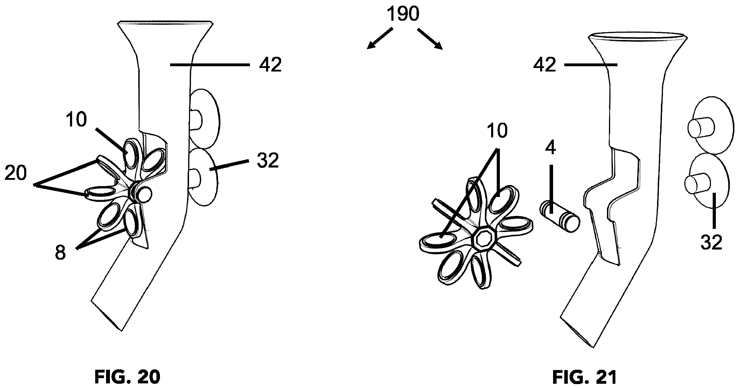

Figure 20 shows toy apparatus 190 of the present invention. The toy apparatus 190 is another form of a bath toy in which the blade formations 8 have no obvious substance-engagement portion except for a flat panel. The blade formations 8 are positioned in the funnel 42 to engage with the substance (not shown). The toy apparatus 190 has securing means 32.

Figure 21 is an exploded view of the toy apparatus 190 shown in Figure 20.

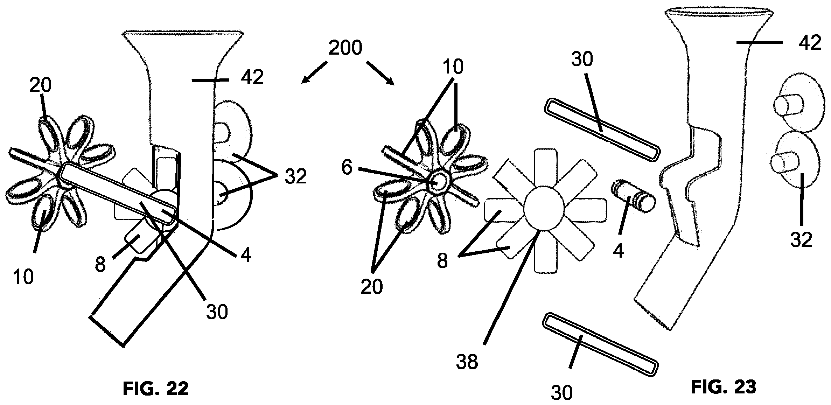

Figure 22 shows toy apparatus 200 of the present invention. The toy apparatus 200 is similar to the toy apparatus 190 but, in the toy apparatus 200, there is a wheel 38 which is positioned within the funnel 42, away from the images 10 and the panels 20. The wheel 38 and its blade formations 8 engage with the substance. The separate images 10 on the separate panels 20 sit on their own wheel and engage with the wheel 38 via mechanical means 30. The toy apparatus 200 may be advantageous over the toy apparatus 190 to improve the visibility of the images 10 which might otherwise be obscured by the substance, in this case a liquid, for example, water. The wheel 38 with its blade formations 8 are designed to be engaged by the substance, such that the substance rotates the rotor 4. The wheel 38 and the images 10 on the panels 20 are connected via the mechanical means 30. The toy apparatus 200 is secured, for example, to a side of a bath by the securing means 32.

Figure 23 is an exploded view of the toy apparatus 200 shown in Figure 22.

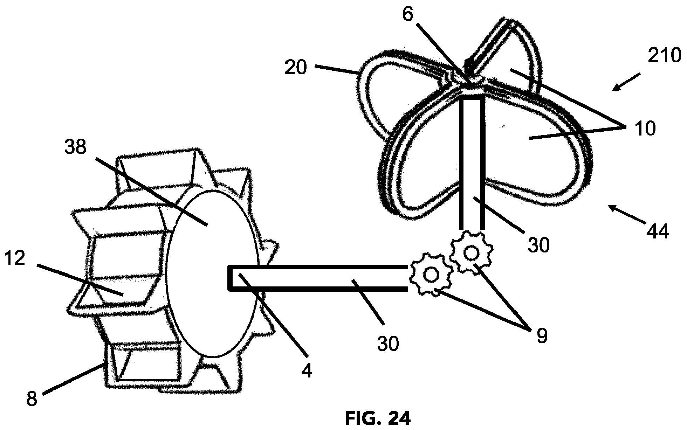

Figure 24 shows toy apparatus 210 of the present invention. The toy apparatus 210 is similar to the toy apparatus 160 and 170 with its linked mechanical means 30. The wheel 38 and its substance-engagement portions 12 are in the form of buckets. The wheel 38 is linked by mechanical means 30 via cog and/or differential wheels 9 to the device 44 displaying the images 10. In the toy apparatus 210, the separation of the blade formations 8 and the device 44 prevents the images 10 on the panels 20 from being obscured by the substance. In the toy apparatus 210, the substance may be delivered to the blade formations 8 by the viewer via, for example, a jug containing the substance. Alternatively, the wheel 38 with its substance-engagement portions 12 may be placed under the substance, for example, water from a running bath tap.

The toy apparatus 210 may form part of a multi-functional toy or standalone toy (not shown). The optical illusion is provided by the moving images 10 on panels 20.

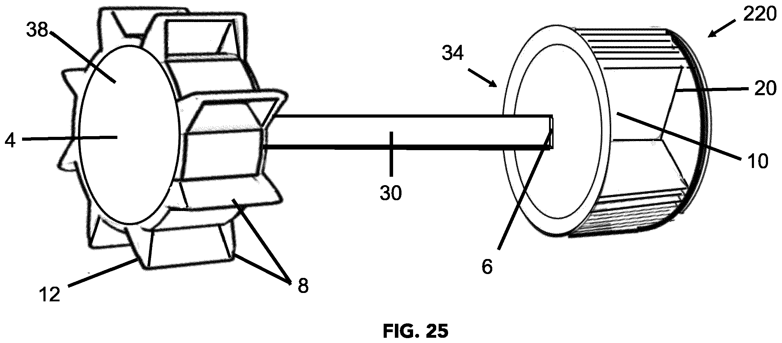

Figure 25 shows toy apparatus 220 which is similar to the toy apparatus 210 but with the device providing the optical illusion being a device 34.

Figure 26 shows toy apparatus 230. Blade formations 8 with the substance-engagement formation 12 are designed to receive the substance 36, with the substance being, for example, in the form of marbles, mud or gel. The rotor 4 is turned consequent to the force and/or weight of the substance 36 in the blade formations 8. Mechanical means 30 forms a link from rotor 4 to drive the image panel 20 on the device 54. It will be seen that the device 54 has secondary blade formations 46 for producing a flicker effect in front of the moving image 10 on the panel 20 in order to produce the optical illusion due to the viewer's persistence of vision.

The different types of toy apparatus shown above are constructed mainly without viewing apertures, but viewing apertures are shown in the toy apparatus 140 and 150.

The toy apparatus shown above may be constructed so that at least the rotor and the blade formations are of a light construction. This may facilitate optimum rotation of the rotor 4 and the images 10 on the blade formations 8. Various types of gearing arrangements may be employed to cause the speed of the rotation of the images 10 to be that required to give the desired optical illusion.

It is to be appreciated that the embodiments of the invention described above with reference to the accompanying drawings have been given by way of example only and that modifications may be affected. Thus, for example, the various types of illustrated toy apparatus in the drawings may be of different shapes to those shown. Substances other than gas, liquid, solids or semi-solids may be employed to engage the at least one blade formation 8 and cause rotation of the rotor 4. Any suitable drive substance may be employed for driving the at least one blade formation 8 such as to cause the rotor to rotate. Thus, other constructions for the blade formation 8 may be employed. Individual components shown in the drawings are not limited to use in their drawings and they may be used in other drawings and in all aspects of the invention. The invention also extends to the individual components mentioned and/or shown above, taken singly or in any combination.

## Claims

1. Toy apparatus for providing an optical illusion, which toy apparatus comprises:
(i) a rotor which rotates about an axis;
(ii) at least one blade formation for being engaged by a substance such as to cause the rotor to rotate; and
(iii) at least one image which rotates consequent upon rotation of the rotor,
and wherein:
(iv) the rotation of the at least one image causes the production of the optical illusion due to the viewer's persistence of vision.

2. Toy apparatus according to claim 1 in which the substance is a gas, and in which the at least one blade formation is for being engaged by the gas such as to cause the rotor to rotate.

3. Toy apparatus according to claim 2 in which the rotor and the at least one blade formation form a windmill construction.

4. Toy apparatus according to claim 1 in which the substance is a liquid, and in which the at least one blade formation is for being engaged by the liquid.

5. Toy apparatus according to claim 4 in which the rotor and the at least one blade formation form a watermill.

6. Toy apparatus according to claim 1 in which the substance is a solid or semi-solid and in which the at least one blade formation is for being engaged by the solid or semi-solid.

7. Toy apparatus according to any one of the preceding claims in which the at least one blade formation comprises a substance-engagement portion for being engaged by the substance such as to cause the rotor to rotate.

8. Toy apparatus according to claim 7 in which the substance-engagement portion is a flap, bucket, scoop, sail, angled vane or propeller.

9. Toy apparatus according to any one of the preceding claims in which the at least one blade formation is a flat panel.

10. Toy apparatus according to any one of the preceding claims in which the at least one blade formation extends from the rotor.

11. Toy apparatus according to any one of the preceding claims in which there is a plurality of the blade formations.

12. Toy apparatus according to any one of the preceding claims in which the at least one image is part of the blade formation.

13. Toy apparatus according to any one of claims 1-11 in which the at least one image is separate from the blade formation.

14. Toy apparatus according to any one of the preceding claims in which the at least one image faces in any direction of the axis about which the rotor rotates.

15. Toy apparatus according to any one of the preceding claims in which the at least one blade formation and rotor and the at least one image rotate in the same or alternative directions to each other.

16. Toy apparatus according to any one of the preceding claims in which there is a plurality of the images.

17. Toy apparatus according to claim 16 in which there is a plurality of separate images, and in which the plurality of separate images rotate in the same or different directions to each other.

18. Toy apparatus according to any one of the preceding claims in which the rotor is linked by a mechanical means to a separate device which displays the image.

19. Toy apparatus according to any one of the preceding claims in which the toy apparatus includes gear means.

20. Toy apparatus according to any one of the preceding claims in which the toy apparatus includes at least one differential wheel.

21. Toy apparatus according to any one of the preceding claims in which the toy apparatus includes support means for enabling the toy apparatus to be held in a person's hand and/or to be placed in the ground.

22. Toy apparatus according to any one of the preceding claims which comprises securing means for securing the toy apparatus to a structure.

23. Toy apparatus according to any one of the preceding claims in which the toy apparatus forms part of another toy or item.

24. Toy apparatus according to any one of the preceding claims and which includes one or multiple rotors.

25. Toy apparatus according to any one of the preceding claims and which includes audio means operated via mechanical means.

26. Toy apparatus according to any one of the preceding claims in which the toy apparatus includes viewing apertures, and in which the viewing apertures facilitate the optical illusion.

27. Toy apparatus according to any one of the preceding claims in which the toy apparatus is free of viewing apertures.

28. Toy apparatus according to any one of the preceding claims in which toy apparatus includes secondary blade formations in order to produce a flicker-effect over the at least one image to facilitate the optical illusion.

29. Toy apparatus according to any one of the preceding claims in which toy apparatus includes joint formation for dynamically positioning the blade formation in an optimum position in relation to the substance.

30. Toy apparatus according to claim 29 in which the joint formation is a swivel joint.
